# FASCICULE DE BREVET EUROPEEN

(11) **EP 3 083 855 B1**
(45) Date de publication et mention de la délivrance du brevet: **21.03.2018**
(21) Numéro de dépôt: 14821063.6
(22) Date de dépôt: 15.12.2014
(51) Int. Cl.: C09D 183/04, C08G 77/12, C08G 77/20, C08L 83/04

(54) **NOUVEAU SYSTEME D'INHIBITION D'HYDROSILYLATION PHOTOACTIVABLE**
ZUSAMMENSETZUNG ZUR PHOTOAKTIVIERBARE HYDROSILYLIERUNGSVERHINDERUNG
NEW INHIBITING SYSTEM FOR PHOTOACTIVABLE HYDROSILYLATION

(30) Priorité: 20.12.2013 FR 1363276
(43) Date de publication de la demande: 26.10.2016
(73) Titulaire: Bluestar Silicones France SAS, 69003 Lyon (FR)
(72) Inventeur: POUGET, Emmanuel, F-69008 Lyon (FR); PIBRE, Guillaume, F-69007 Lyon (FR); MARROT, Sebastien, F-69008 Lyon (FR)
(74) Mandataire: Mekki, Boualem
(86) Numéro de dépôt international: PCT/EP2014/003352
(87) Numéro de publication internationale: WO 2015/090551

(56) Documents cités:
- EP-A2- 0 238 033
- US-A- 6 046 250
- US-A1- 2003 027 003
- M.A. TEHFE, F. LOURADOUR, J. LAVELÉE, J.-P. FOUASSIER: "Photopolymerization reactions: on the way to a green and sustainable chemistry", APPLIED SCIENCES, vol. 3, 24 avril 2013 (2013-04-24), pages 490-514, XP002725162,

## Description

### DOMAINE DE L'INVENTION

La présente invention s'inscrit dans le domaine technique de la préparation de compositions silicones. Plus spécifiquement, la présente invention concerne des compositions silicones durcissables comprenant un nouveau système d'inhibition des réactions d'hydrosilylation.

### ARRIERE-PLAN TECHNOLOGIQUE

Dans le domaine des silicones, l'hydrosilylation, également appelée polyaddition, est une réaction majeure.

Lors d'une réaction d'hydrosilylation, un composé comprenant au moins une insaturation réagit avec un composé comprenant au moins un atome d'hydrogène lié à un atome de silicium. Cette réaction peut par exemple être décrite par l'équation réactionnelle (1) dans le cas d'une insaturation de type alcène : 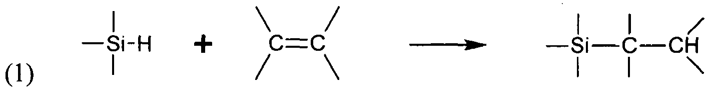 ou par l'équation réactionnelle (2) dans le cas d'une insaturation de type alcyne :

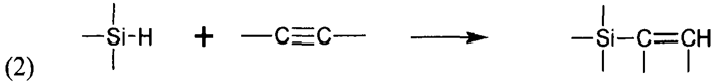

L'hydrosilylation permet donc d'une part d'accéder à des silanes ou siloxanes fonctionnalisés, et d'autre part de former des réseaux silicones par réticulation entre des polysiloxanes comprenant des motifs Si-H et des polysiloxanes comprenant des motifs Si-vinyle. Une application classique de cette réaction est la formation de revêtements ou de films silicones anti-adhérents sur des supports en papiers ou en polymères.

Les réactions d'hydrosilylation sont classiquement réalisées par catalyse. Typiquement, le catalyseur approprié pour cette réaction est un catalyseur au platine, tel que par exemple l'acide chloroplatinique hexahydrate ou le catalyseur de Karstedt qui est constitué de complexes de platine avec du divinyltétraméthyldisiloxane comme ligand (voir par exemple dans le brevet US 3 775 452). En faible quantité, ce catalyseur permet d'effectuer des réactions d'hydrosilylation à température ambiante avec une cinétique rapide, de l'ordre de quelques minutes.

Afin d'avoir le temps de préparer, transporter et mettre en oeuvre la composition avant son durcissement, il est souvent nécessaire d'inhiber temporairement la réaction d'hydrosilylation. Par exemple, lorsqu'on souhaite revêtir un substrat papier ou polymère d'un revêtement silicone anti-adhérent, la composition silicone est formulée pour former un bain qui doit rester liquide à température ambiante pendant plusieurs heures avant d'être déposée sur le substrat. Ce n'est qu'après ce dépôt que l'on souhaite que le durcissement par hydrosilylation se produise. Des inhibiteurs de réaction d'hydrosilylation peuvent être de plusieurs sortes. Les plus répandus sont des inhibiteurs thermiques. Maintenus à température ambiante, ils inhibent la réaction d'hydrosilylation. En élevant la température du milieu réactionnel, on désactive l'inhibition et on active la réaction d'hydrosilylation. Classiquement, l'activation thermique est réalisée en introduisant les substrats revêtus de la composition silicone durcissable dans des fours d'enduction dont la température est maintenue entre 100°C et 150°C. Des exemples d'inhibiteurs thermiques et de leur utilisation sont décrits dans les demandes de brevets WO 2011/076710, WO 2012/085364 et WO2012/175825. L'inconvénient majeur de l'activation thermique de l'hydrosilylation est qu'elle ne peut pas être utilisée sur un substrat ne résistant pas à la chaleur.

Pour résoudre ce problème, il a été proposé de mettre en oeuvre des réactions d'hydrosilylation que l'on peut déclencher par exposition à un rayonnement UV. Pour cela, une solution consiste à disposer d'un catalyseur d'hydrosilylation spécifique activable par rayonnement UV, comme décrit par exemple dans la demande internationale de brevet WO 92/10529. Une autre solution consiste à utiliser un catalyseur d'hydrosilylation classique et de lui adjoindre un photoinhibiteur : le photoinhibiteur a pour fonction d'empêcher la réaction d'hydrosilylation lorsqu'il est présent dans le milieu réactionnel. Par contre, à la différence de l'inhibiteur thermique, un photoinhibiteur est désactivé non pas par la chaleur mais par exposition à un rayonnement UV.

Des exemples de photoinhibiteurs ont été donnés dans la littérature. Les brevets US 4 640 939 et US 4 670 531 décrivent l'utilisation de composés azo comme inhibiteur de réaction. Il a été décrit dans la demande de brevet européen EP 0 238 033 des compositions polyorganosiloxanes photodurcissables contenant un diorganopolysiloxane essentiellement linéaire comprenant des fonctions vinyles en bout de chaînes, un organohydrogénopolysiloxane, un catalyseur à base de platine, un photosensibilisateur et éventuellement un composé modulateur qui a pour fonction d'éviter la réaction prématurée des compositions durcissables. Les modulateurs décrits sont des composés acétyléniques tels que le 3,5-diméthyl-1-hexyn-3-ol, le 3-méthyl-1-butyn-3-ol, le 3-méthyl-3-penten-1-yne, le 3-méthyl-1-pentyn-3-ol et le 5,5-diméthyl-3-hexen-1-yne. Par ailleurs, le brevet US 5 082 871 décrit l'utilisation de composés de type acétylène-dicarboxylate de dialkyle comme inhibiteur de la réaction d'hydrosilylation catalysée au platine désactivable par irradiation aux UV.

Le document EP-A-238033 divulgue des compositions polyorganosiloxanes photodurcissables contenant un diorganopolysiloxane comprenant des fonctions Si-vinyles en bout de chaînes, un organohydrogenopolysiloxane à motifs Si-H, un catalyseur à base de platine, un photosensibilisateur en tant que photoamorceur et éventuellement un composé modulateur ayant pour fonction d'éviter la réaction prématurée des compositions durcissables. Les composés alcools α-acétyléniques figurent parmi les composés inhibiteur et une benzophénone est utilisée en tant que photoamorceur. Ce document décrit également un procédé de préparation de revêtement silicone par application de la composition silicone durcissable sur un substrat suivi par irradiation.

Le document US-A-2003/027003 décrit un procédé de préparation d'un film comprenant une couche de silicone durcie par radiations UV comprenant l'enduction sur un support d'une composition de silicone comprenant un diorganopolysiloxane ayant des fonctions Si-vinyles, un organohydrogenopolysiloxane à motifs Si-H, un catalyseur à base de platine, un photosensibitisateur et éventuellement un composé modulateur tel qu'un alcool alpha-acétylénique ayant pour fonction d'éviter la réaction prématurée des compositions durcissables. Les composés inhibiteur sont désactivables par irradiation aux UV et sont choisis parmi les alcools α-acétyléniques et le benzotriazole, le photoamorceur inclus les composés de type benzophénones.

Le document US-A-6 046 250 se réfère à des compositions polyorganosiloxanes photodurcissables contenant un diorganopolysiloxane comprenant des fonctions Si-vinyles en bout de chaînes, un organohydrogenopolysiloxane à motifs Si-H, un catalyseur à base de platine, un photoinitiateur capable d'absorber les radiations UV et éventuellement un composé inhibiteur tel qu'un alcool acétylénique ou un maléate dans le but d'améliorer le temps de vie en pot des compositions durcissables. Les compositions peuvent également comprendre un composé sensibilisateur capable d'absorber les radiations UV et de transférer l'énergie au complexe du platine.

Dans l'article Applied Science, Vol.3, pages 490-514, "Photopolymerisation reactions: on the way to a green and sustainable chemistry" il est décrit un procédé de photopolymérisation par radiations UV et en particulier l'utilisation du tris(trimethylsilyl)silane TTMSS en tant qu'additif dans les compositions soumises à des réactions de photopolymérisation dans le but d'améliorer la réactivité photochimique en présence d'oxygène.

Une des fonctions essentielles d'un système d'inhibition est donc d'empêcher efficacement la réaction d'hydrosilylation durant un temps aussi longtemps que nécessaire avant activation. Pour ce faire, on peut être amené à utiliser de grandes quantités d'agent inhibiteur, ce qui provoque une forte inhibition du catalyseur d'hydrosilylation. Cela a pour conséquence que la vitesse de durcissement de la composition, même après activation, est ralentie, ce qui est un inconvénient important d'un point de vue industriel car cela oblige notamment à réduire la vitesse d'enduction et donc la cadence de production.

Il serait donc intéressant de disposer de nouveaux systèmes d'inhibition d'hydrosilylation désactivables thermiquement ou par irradiation aux UV. On souhaite disposer de compositions silicones durcissables par hydrosilylation contenant un système d'inhibition permettant à la fois :
- d'inhiber aussi longtemps que nécessaire la réaction d'hydrosilylation avant activation,
- d'assurer une levée rapide de l'inhibition au moment de l'activation et
- de préférence, d'assurer une vitesse de réticulation élevée.

### BREVE DESCRIPTION DE L'INVENTION

La présente invention a pour objet une composition silicone durcissable comprenant :
**A.** au moins un organopolysiloxane comprenant, par molécule, au moins deux radicaux alcényles liés à des atomes de silicium ;
**B.** au moins un organohydrogénopolysiloxane comprenant, par molécule, au moins deux atomes d'hydrogène liés à des atomes de silicium, et de préférence au moins trois atomes d'hydrogène liés à des atomes de silicium ;
**C.** au moins un catalyseur d'hydrosilylation ;
**D.** au moins un inhibiteur choisi parmi les alcools α-acétyléniques, les diesters α-α'-acétyléniques, les composés conjugués ène-yne, les cétones α-acétyléniques, les acrylonitriles, les maléates, les fumarates et les mélanges de ceux-ci,
**E.** au moins un photoamorceur,
**F.** du tris(triméthylsilyl)silane (TTMSS).

Les inventeurs ont découvert que, de façon tout à fait surprenante, le mélange d'un inhibiteur, d'un photoamorceur et de TTMSS comme décrit ci-dessus fonctionnait de façon synergique et permettait d'assurer une bonne inhibition de la réaction d'hydrosilylation tout en ayant une cinétique de levée d'inhibition améliorée par rapport aux compositions connues.

La présente invention a donc également pour objet l'utilisation d'un mélange d'un inhibiteur choisi parmi les alcools α-acétyléniques, les diesters α-α'-acétyléniques, les composés conjugués ène-yne, les cétones α-acétyléniques, les acrylonitriles, les maléates, les fumarates et les mélanges de ceux-ci, d'un photoamorceur et de TTMSS comme système d'inhibition dans une composition silicone durcissable.

Cette composition silicone durcissable est particulièrement adaptée pour la préparation de revêtements silicone, et tout particulièrement pour la préparation de revêtements silicone anti-adhérents. C'est pourquoi la présente invention a également pour objet un procédé de préparation d'un revêtement silicone sur un substrat comprenant les étapes consistant à revêtir ledit substrat avec ladite composition silicone durcissable et durcir cette composition par irradiation.

Par ailleurs, cette composition silicone durcissable peut aussi être utilisée pour la préparation de matériaux élastomères durs.

### BREVE DESCRIPTION DES FIGURES

La **figure 1** représente le dispositif expérimental utilisé dans les exemples.
La **figure 2** représente l'évolution de la tension aux bornes de l'aiguille oscillante en fonction du temps lors des essais 2 à 6 décrits dans les exemples.

### DESCRIPTION DETAILLEE DE L'INVENTION

Il est entendu que, dans le contexte de cette description, le terme « compris entre... et ... » doit être interprété comme incluant les bornes indiquées.

La présente invention a donc pour objet une composition silicone durcissable comprenant :
**A.** au moins un organopolysiloxane comprenant, par molécule, au moins deux radicaux alcényles liés à des atomes de silicium ;
**B.** au moins un organohydrogénopolysiloxane comprenant, par molécule, au moins deux atomes d'hydrogène liés à des atomes de silicium ; et de préférence au moins trois atomes d'hydrogène liés à des atomes de silicium
**C.** au moins un catalyseur d'hydrosilylation ;
**D.** au moins un inhibiteur choisi parmi les alcools α-acétyléniques, les diesters α-α'-acétyléniques, les composés conjugués ène-yne, les cétones α-acétyléniques, les acrylonitriles, les maléates, les fumarates et les mélanges de ceux-ci,
**E.** au moins un photoamorceur,
**F.** du tris(triméthylsilyl)silane (TTMSS).

La combinaison des composés **D**, **E** et **F** est capable d'inhiber temporairement une réaction d'hydrosilylation entre les composés **A** et les composés **B** en présence du catalyseur d'hydrosilylation **C.**

D'une part, la composition selon l'invention comprend au moins un inhibiteur **D** choisi parmi les alcools α-acétyléniques, les diesters α-α'-acétyléniques, les composés conjugués ène-yne, les cétones α-acétyléniques, les acrylonitriles, les maléates, les fumarates et les mélanges de ceux-ci. Ces composés capables de remplir la fonction d'inhibiteur d'hydrosilylation sont bien connus de l'homme du métier. Ils peuvent être utilisés seuls ou en mélanges.

Un inhibiteur **D** de type alcool α-acétylénique peut être choisi parmi les composés de formule (D1) suivante :

(R¹)(R²)C(OH)-C≡CH (D1)

dans laquelle :
- le groupe R¹ représente un groupe alkyle, un groupe cycloalkyle, un groupe (cycloalkyl)alkyle, un groupe aryle ou un groupe arylalkyle,
- le groupe R² représente un atome d'hydrogène, un groupe alkyle, un groupe cycloalkyle, un groupe (cycloalkyl)alkyle, un groupe aryle ou un groupe arylalkyle,
- ou bien R¹ et R² constituent ensemble avec l'atome de carbone auquel ils sont liés un cycle aliphatique à 5, 6, 7 ou 8 chaînons, éventuellement substitué une ou plusieurs fois.

Par « alkyle », on entend selon l'invention une chaîne hydrocarbonée saturée contenant de 1 à 20 atomes de carbone, de préférence de 1 à 8 atomes de carbone. Un groupe alkyle peut être choisi dans le groupe constitué par méthyle, éthyle, isopropyle, n-propyle, tert-butyle, isobutyle, n-butyle, n-pentyle, isoamyle et 1,1-diméthylpropyle.

Par « cycloalkyle », on entend selon l'invention un groupe hydrocarboné saturé monocyclique ou polycyclique, de préférence monocyclique ou bicyclique, contenant de 3 à 20 atomes de carbone, de préférence de 5 à 8 atomes de carbone. Lorsque le groupe cycloalkyle est polycyclique, les multiples noyaux cycliques peuvent être rattachés les uns aux autres par une liaison covalente et/ou par un atome spinanique et/ou être condensés les uns aux autres. Un groupe cycloalkyle peut être choisi dans le groupe constitué par le cyclopropyle, le cyclobutyle, le cyclopentyle, le cyclohexyle, le cycloheptyle, le cyclooctyle, l'adamantane et le norborane.

Par « (cycloalkyl)alkyle », on entend selon l'invention un groupe cycloalkyle tel que défini ci-avant lié à un groupe alkyle tel que défini ci-avant également.

Par « aryle », on entend selon l'invention un groupe hydrocarboné aromatique contenant de 5 à 18 atomes de carbone, monocyclique ou polycyclique. Un groupe aryle peut être choisi dans le groupe constitué par phényle, naphtyle, anthracényle et phénanthryle.

Par « arylalkyle », on entend selon l'invention un groupe aryle tel que défini ci-avant lié à un groupe alkyle tel que défini ci-avant également.

Selon un mode de réalisation préféré, R¹ et R² constituent ensemble avec l'atome de carbone auquel ils sont liés un cycle aliphatique non substitué à 5, 6, 7 ou 8 chaînons. Selon un autre mode de réalisation préféré, R¹ et R², identiques ou différents, représentent indépendamment l'un de l'autre un groupe alkyle monovalent en C₁ à C₁₂, de préférence en C₁ à C₆.

Un inhibiteur **D** qui est un alcool α-acétylénique utile selon l'invention peut être choisi dans le groupe constitué par les composés suivants: 1-éthynyl-1-cyclopentanol ; 1-éthynyl-1-cyclohexanol (aussi appelé ECH) ; 1-éthynyl-1-cycloheptanol ; 1-éthynyl-1-cyclooctanol; 3-méthyl-1-butyn-3-ol (aussi appelé MBT); 3-méthyl-1-pentyn-3-ol ; 3-méthyl-1-hexyn-3-ol ; 3-méthyl-1-heptyn-3-ol ; 3-méthyl-1-octyn-3-ol ; 3-méthyl-1-nonyn-3-ol ; 3-méthyl-1-decyn-3-ol ; 3-méthyl-1-dodecyn-3-ol ; 3-méthyl-1-pentadecyn-3-ol ; 3-éthyl-1-pentyn-3-ol ; 3-éthyl-1-hexyn-3-ol ; 3-éthyl-1-heptyn-3-ol ; 3,5-diméthyl-1-hexyn-3-ol ; 3-isobutyl-5-méthyl-1-hexyn-3-ol ; 3,4,4-triméthyl-1-pentyn-3-ol ; 3-éthyl-5-méthyl-1-heptyn-3-ol ; 3,6-diéthyl-1-nonyn-3-ol ; 3,7,11-triméthyl-1-dodecyn-3-ol (aussi appelé TMDDO); 1,1-diphényl-2-propyn-1-ol ; 3-butyn-2-ol ; 1-pentyn-3-ol ; 1-hexyn-3-ol ; 1-heptyn-3-ol ; 5-méthyl-1-hexyn-3-ol ; 4-éthyl-1-octyn-3-ol et 9-éthynyl-9-fluorenol.

Un inhibiteur **D** de type diester α-α'-acétylénique peut être choisi parmi les composés de formule (D2) suivante : 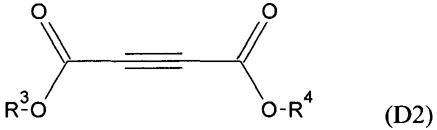 dans laquelle les groupe R³ et R⁴, identiques ou différents, représentent indépendamment l'un de l'autre un groupe alkyle, un groupe cycloalkyle, un groupe (cycloalkyl)alkyle, un groupe aryle, un groupe arylalkyle ou un groupe silyle.

Par « silyle », on entend selon l'invention un groupe de formule -SiR₃, chaque R représentant indépendamment un groupe alkyle contenant de 1 à 20 atomes de carbone, de préférence de 1 à 8 atomes de carbone. Un groupe silyle peut être par exemple le groupe triméthylsilyle.

Selon un mode de réalisation particulier, R³ et R⁴, identiques ou différents, représentent indépendamment l'un de l'autre un groupe alkyle en C₁ à C₁₂, de préférence en C₁ à C₆, ou le groupe triméthylsilyle. Un inhibiteur **D** qui est un diester α-α'-acétylénique utile selon l'invention peut être choisi dans le groupe constitué par les composés suivants : l'acétylène-dicarboxylate de diméthyle (DMAD), l'acétylène-dicarboxylate de diéthyle, l'acétylène-dicarboxylate de tert-butyle et l'acétylène-dicarboxylate de bis(triméthylsilyle).

Un inhibiteur **D** de type composé conjugué ène-yne peut être choisi parmi les composés de formule (D3) suivante : 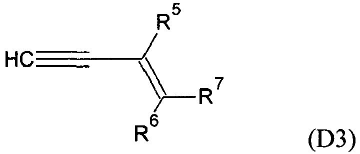 dans laquelle :
- les groupes R⁵, R⁶ et R⁷ représentent, indépendamment les uns des autres, un atome d'hydrogène, un groupe alkyle, un groupe cycloalkyle, un groupe (cycloalkyl)alkyle, un groupe aryle ou un groupe arylalkyle,
- ou bien au moins deux groupes parmi les groupes R⁵, R⁶ et R⁷ constituent ensemble avec le ou les atomes de carbone auxquels ils sont liés un cycle aliphatique à 5, 6, 7 ou 8 chaînons, éventuellement substitué une ou plusieurs fois.

Selon un mode de réalisation particulier, les groupes R⁵, R⁶ et R⁷ représentent, indépendamment les uns des autres, un atome d'hydrogène, un groupe alkyle en C₁ à C₁₂, de préférence en C₁ à C₆, ou un groupe aryle. Un inhibiteur **D** qui est un composé conjugué ène-yne utile selon l'invention peut être choisi dans le groupe constitué par les composés suivants : le 3-méthyl-3-pentène-1-yne ; le 3-méthyl-3-hexène-1-yne ; le 2,5-diméthyl-3-hexène-1-yne ; le 3-éthyl-3-butène-1-yne ; et le 3-phényl-3-butène-1-yne. Selon un autre mode de réalisation particulier, deux groupes choisis parmi les groupes R⁵, R⁶ et R⁷ constituent ensemble avec le ou les atomes de carbone auxquels ils sont liés un cycle aliphatique non substitué à 5, 6, 7 ou 8 chaînons et le troisième groupe restant représente un atome d'hydrogène ou un groupe alkyle en C₁ à C₁₂, de préférence en C₁ à C₆. Un inhibiteur **D** qui est un composé conjugué ène-yne utile selon l'invention peut être le 1-éthynyl-1-cyclohexène.

Un inhibiteur **D** de type cétone α-acétylénique peut être choisi parmi les composés de formule (D4) suivante : 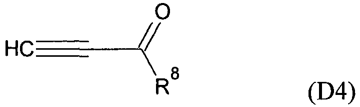 dans laquelle R⁸ représente un groupe alkyle, un groupe cycloalkyle, un groupe (cycloalkyl)alkyle, un groupe aryle ou un groupe arylalkyle, les groupes alkyles, cycloalkyles, (cycloalkyl)alkyle, aryle ou arylalkyle pouvant éventuellement être substitué une ou plusieurs fois par un atome de chlore, de brome ou d'iode.

Selon un mode de réalisation préféré, R⁸ représente un groupe alkyle monovalent en C₁ à C₁₂, de préférence en C₁ à C₆, éventuellement être substitué une ou plusieurs fois par un atome de chlore ou de brome, ou un groupe cycloalkyle, ou un groupe aryle. Un inhibiteur **D** qui est une cétone α-acétylénique utile selon l'invention peut être choisi dans le groupe constitué par les composés suivants : la 1-octyn-3-one, la 8-chloro-1-octyn-3-one ; la 8-bromo-1-octyn-3-one ; la 4,4-diméthyl-1-octyn-3-one ; la 7-chloro-1-heptyn-3-one ; la 1-hexyn-3-one ; la 1-pentyn-3-one ; la 4-méthyl-1-pentyn-3-one ; la 4,4-diméthyl-1-pentyn-3-one ; la 1-cyclohexyl-1-propyn-3-one ; le benzoacétylène et le o-chlorobenzoyl-acétylène.

Un inhibiteur **D** de type acrylonitrile peut être choisi parmi les composés de formule (D5) suivante : 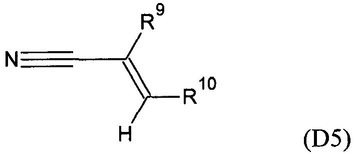 dans laquelle R⁹ et R¹⁰ représentent, indépendamment l'un de l'autre, un atome d'hydrogène, un atome de chlore, de brome ou d'iode, un groupe alkyle, un groupe cycloalkyle, un groupe (cycloalkyl)alkyle, un groupe aryle ou un groupe arylalkyle, les groupes alkyles, cycloalkyles, (cycloalkyl)alkyle, aryle ou arylalkyle pouvant éventuellement être substitué une ou plusieurs fois par un atome de chlore, de brome ou d'iode. Un inhibiteur **D** qui est un acrylonitrile utile selon l'invention peut être choisi dans le groupe constitué par les composés suivants : l'acrylonitrile ; le méthacrylonitrile ; le 2-chloroacrylonitryle ; le crotononitrile et le cinnamonitrile.

Un inhibiteur **D** de type maléate ou fumarate peut être choisi parmi les composés de formules (D6) et (D7) suivantes : 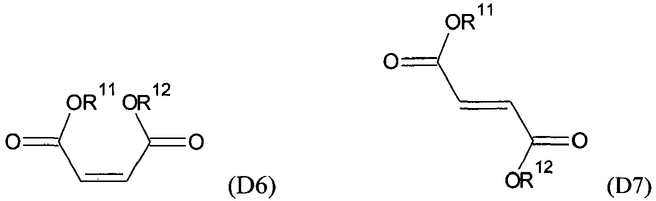 dans lesquelles R¹¹ et R¹², identiques ou différents, représentent indépendamment l'un de l'autre un groupe alkyle ou alcényle, un groupe cycloalkyle, un groupe (cycloalkyl)alkyle, un groupe aryle ou un groupe arylalkyle, lesdits groupes alkyles, alcényles, cycloalkyles, (cycloalkyl)alkyles, aryles et arylalkyles pouvant être substitués par un groupe alcoxy.

Par « alcényle », on entend selon l'invention une chaîne hydrocarbonée saturée contenant de 1 à 20 atomes de carbone, de préférence de 1 à 8 atomes de carbone comprenant au moins une double insaturation. Un groupe alcényle peut être choisi dans le groupe constitué par vinyle ou allyle.

Par « alcoxy », on entend selon l'invention un groupe alkyle tel que défini ci-avant lié à un atome d'oxygène. Un groupe alcoxy peut être choisi dans le groupe constitué par méthoxy, éthoxy, propoxy et butoxy.

Selon un mode de réalisation particulier, R¹¹ et R¹², identiques ou différents, représentent indépendamment l'un de l'autre un groupe alkyle ou alcényle en C₁ à C₁₂, de préférence en C₁ à C₆, éventuellement substitué par un groupe alcoxy en C₁ à C₆.

Un inhibiteur **D** qui est un maléate ou un fumarate utile selon l'invention peut être choisi dans le groupe constitué par le fumarate de diéthyle, le maléate de diéthyle, le fumarate de diallyle, le maléate de diallyle et le maléate de bis-(méthoxyisopropyle).

Des inhibiteurs **D** choisis parmi les alcools α-acétyléniques, les diesters α-α'-acétyléniques, les composés conjugués ène-yne, les cétones α-acétyléniques, les acrylonitriles, les maléates, les fumarates sont disponibles dans le commerce. On peut citer notamment l'ECH qui est disponible commercialement chez BASF, le maléate de diméthyle qui est disponible commercialement chez DMS et l'acétylène-dicarboxylate de diméthyle qui est disponible chez City Chemical LLC.

Outre le composé inhibiteur **D**, la composition selon l'invention comprend au moins un photoamorceur **E.** Un photoamorceur est un composé chimique ou une combinaison de plusieurs composés chimiques (on peut parler dans ce cas de système photoamorceur) capable de générer des radicaux libres par absorption de rayonnement ayant une longueur d'onde comprise entre 200 nm et 800 nm. Il est possible d'utiliser en combinaison avec un photoamorceur un composé photosensibilisateur. Les composés photosensibilisateurs sont bien connus de l'homme du métier. Ce sont des molécules capables d'absorber le rayonnement et de transférer cette énergie à une autre molécule, en l'occurrence le photoamorceur.

Les composés photoamorceurs sont bien connus de l'homme du métier. Ils peuvent être utilisés seuls ou en mélanges.

Classiquement, les photoamorceurs sont classés en deux grandes catégories selon leur mécanisme d'amorçage : les photoamorceurs de type I et les photoamorceurs de type II.

Les photoamorceurs de type I se caractérisent par le fait que les composés subissent une coupure homolytique d'une liaison générant des radicaux susceptibles d'amorcer la réaction de photopolymérisation. Les photoamorceurs de type I peuvent être par exemple choisis dans le groupe constitué par :
- la benzoïne et les éthers de benzoïne : l'éther méthylique de benzoïne, l'éther butylique de benzoïne ;
- les acétophénones : par exemple l'acétophénone non substitué, le 3-méthyl-acétophonone, le 4-méthyl-acétophonone, le 3-pentyl-acétophonone, le 4-méthoxy-acétophonone, le 3-bromo-acétophonone, le 4-allyl-acétophonone ;
- les alpha-hydroxy-cétones, et notamment les alpha-hydroxy-acétophénones : par exemple le bis[4-(2-hydroxy-2-méthylpropionyl)phényl]méthane, la 2-hydroxy-1-[4-4-(2-hydroxy-2-méthyl-propionyl)phénoxy)-phényl]-2-méthyl-1-one, la 2-hydroxy-2-méthyl-1-phényl-propan-1-one, la 2-hydroxy-2-méthyl-1-(4-tert-butyl)phényl-propan-1-one ;
- les acylphosphine oxydes.

Les photoamorceurs de type II se caractérisent par le fait qu'ils ne subissent pas de réaction de fragmentation lorsqu'après une irradiation ils passent dans leur état excité (appelé « triplet »). Ainsi, une irradiation provoque une réaction de transfert d'hydrogène ou un transfert d'électron suivi par un transfert de proton entre le photoamorceur et un co-amorceur. Les photoamorceurs de type II peuvent être choisis dans le groupe constitué par :
- les benzophénones : par exemple la benzophénone non substituée, la 3-méthoxy-benzophénone, la 4-méthoxy-benzophénone, la 4-méthyl-benzophénone, la 4-chloro-benzophénone, la 4,4'-diméthoxy-benzophénone, la 4-chloro-4'-benzyl-benzophénone, la 2,4,6-triméthylbenzophénone ;
- les thioxanthones : par exemple l'isopropylthioxanthone ;
- la camphorquinone.

Les co-amorceurs peuvent être choisis dans le groupe constitué par les éthers, les amides, les amines, les thiols, les thioéthers, les sulfates, les carboxinates et les alcools aliphatiques, et de préférence parmi les composés suivants : N-phénylglycine, éthyl-p-diméthylaminobenzoate, phényltetrazolethiol, 2-mercaptobenzothiazol et leurs mélanges.

Un grand nombre de photoamorceurs sont disponibles dans le commerce. On peut citer notamment :
- comme photoamorceur de type I : ceux commercialisés par exemple par les sociétés IGM Resins, Lambson, BASF, Lamberti et Chivacure, par exemple le photoamorceur Omnirad 102 d'IGM Resins, les photoamorceurs Irgacure® 184, 1173, 2959, MBF, 754, 651, 369, 907, 1300, TPO, 819, 2100 et 784 de BASF, et les photoamorceurs Esacure® KIP100F et KIP150 de Lamberti ;
- comme photoamorceur de type II : le photoamorceur Esacure® TZT de Lamberti, le photoamorceur Irgacure® BP de BASF, les photoamorceurs Omnirad CTX, DETX et ITX d'IGM Resins, le co-amorceur Esacure® EDB de Lamberti.

Selon un mode de réalisation préféré, la composition selon l'invention comprend au moins un photoamorceur de type I, et plus préférentiellement au moins une alpha-hydroxy-acétophénone.

Selon un autre mode de réalisation préféré, la composition selon l'invention comprend au moins un photoamorceur de type II, et plus préférentiellement au moins une benzophénone ou un mélange de plusieurs benzophénones.

Enfin, la composition selon l'invention comprend du tris(triméthylsilyl)silane **F.** Ce composé chimique de formule (CH₃Si)₃SiH est couramment nommé « TTMSS ». Il est disponible dans le commerce, par exemple chez Aldrich.

Les ratios molaires entre l'inhibiteur **D**, le photoamorceur **E** et le TTMSS sont de préférence tels que :
- le ratio molaire entre le TTMSS et l'inhibiteur **D** est compris entre 0,0001 et 20, de façon plus préférée entre 0,001 et 5, et de façon encore plus préférée entre 0,001 et 3 ; et/ou
- le ratio molaire entre le TTMSS et le photoamorceur **E** est compris entre 0,001 et 10, de façon plus préférée entre 0,005 et 5, et de façon encore plus préférée entre 0,01 et 2.

Les inventeurs ont découvert que l'inhibiteur **D**, le photoamorceur **E** et le TTMSS **F** comme décrit ci-dessus pouvait avantageusement être utilisé comme système d'inhibition dans les compositions silicones durcissables par polyaddition. De façon tout à fait surprenante, il a été découvert que la présence de ces trois composés produisait un effet synergique : le système d'inhibition obtenu permet avantageusement d'assurer une bonne inhibition de la réaction d'hydrosilylation tout en ayant une cinétique de levée d'inhibition améliorée par rapport aux compositions connues.

La composition silicone selon l'invention est durcissable. Elle est capable de réticuler par hydrosilylation lorsqu'elle est exposée à une source d'irradiation ou une source de chaleur. Il s'agit d'une composition silicone durcissable par des réactions de polyaddition.

De préférence, le polyorganosiloxane **A** selon l'invention est porteur d'au moins deux groupements alcényles liés à des atomes de silicium. Selon un mode de réalisation préféré, ce polyorganosiloxane **A** comprend :
(i) au moins deux motifs de formule (A1):

   YₐZ_{b}SiO_{(4-(a+b)/2} (A1)

   dans laquelle :
   - Y représente un radical monovalent contenant de 2 à 12 atomes de carbone, ayant au moins une fonction alcène et éventuellement au moins un hétéroatome,
   - Z représente un radical monovalent contenant de 1 à 20 atomes de carbone et ne comprenant pas de fonction alcène ou alcyne ;
   - a et b représentent des nombres entiers, a valant 1, 2 ou 3, b valant 0, 1 ou 2 et (a+b) valant 1, 2 ou 3 ;
(ii) et comportant éventuellement d'autres motifs de formule (A2) :

   Z_{c}SiO_{(4-c)/2} (A2)

   dans laquelle :
   - Z a la même signification que ci-dessus, et
   - c représente un nombre entier compris entre 0 et 3.

Il est entendu dans la formule (A1) et dans la formule (A2) ci-dessus que, si plusieurs radicaux Y et Z sont présents, ils peuvent être identiques ou différents les uns des autres.

Dans la formule (A1), le symbole a peut préférentiellement valoir 1 ou 2, plus préférentiellement 1.

De plus, dans la formule (A1) et dans la formule (A2), Z peut représenter un radical monovalent choisi dans le groupe constitué par un groupe alkyle ayant 1 à 8 atomes de carbone, éventuellement substitué par au moins un atome d'halogène, et un groupe aryle. Z peut avantageusement représenter un radical monovalent choisi dans le groupe constitué par méthyle, éthyle, propyle, 3,3,3-trifluoropropyle, xylyle, tolyle et phényle.

En outre, dans la formule (A1), Y peut avantageusement représente un radical choisi dans le groupe constitué par vinyle, propényle, 3-butényle, 5-hexényle, 9-décényle, 10-undécényle, 5,9-décadiényle et 6,11-dodécadiényle.

Le polyorganosiloxane **A** peut présenter une structure linéaire, ramifié, cycliques ou en réseau.

Lorsqu'il s'agit de polyorganosiloxanes linéaires, ceux-ci peuvent être essentiellement constitués :
- de motifs siloxyles « D » choisi parmi les motifs de formules Y₂SiO_{2/2}, YZSiO_{2/2} et Z₂SiO_{2/2} ;
- de motifs siloxyles « M » choisis parmi les motifs de formules Y₃SiO_{1/2}, Y₂ZSiO_{1/2}, YZ₂SiO_{1/2} et Z₃SiO_{2/2}.

A titre d'exemples de motifs « D », on peut citer les groupes diméthylsiloxy, méthylphénylsiloxy, méthylvinylsiloxy, méthylbuténylsiloxy, méthylhexénylsiloxy, méthyldécénylsiloxy et méthyldécadiénylsiloxy.

A titre d'exemple de motifs « M », on peut citer les groupes triméthylsiloxy, diméthylphénylsiloxy, diméthylvinylsiloxy et diméthylhexénylsiloxy.

Ces polyorganosiloxanes linéaires peuvent être des huiles ayant une viscosité dynamique à 25°C comprise entre 1 mPa.s et 100 000 mPa.s, préférentiellement entre 10 mPa.s et 5 000 mPa.s, ou des gommes ayant une viscosité dynamique à 25°C supérieure à 100 000 mPa.s.

Lorsqu'il s'agit de polyorganosiloxanes cycliques, ceux-ci peuvent être constitués de motifs siloxyles « D » choisi parmi les motifs de formules Y₂SiO_{2/2}, YZSiO_{2/2} et Z₂SiO_{2/2}. Des exemples de tels motifs « D » sont décrits ci-dessus. Ces polyorganosiloxanes cycliques peuvent avoir une viscosité dynamique à 25°C comprise entre 1 mPa.s et 5 000 mPa.s.

La viscosité dynamique à 25°C de tous les polymères décrits dans la présente demande peut être mesurée à l'aide d'un viscosimètre Brookfield.

Des exemples de polyorganosiloxanes **A** sont :
- les polydiméthylsiloxanes à extrémités diméthylvinylsilyles ;
- les poly(méthylphénylsiloxane-co-diméthylsiloxane) à extrémités diméthylvinylsilyles ;
- les poly(vinylméthylsiloxane-co-diméthylsiloxane) à extrémités diméthylvinylsilyles ;
- les poly(diméthylsiloxane-co-vinylméthylsiloxane) à extrémités triméthylsilyles ;
- les polyméthylvinylsiloxanes cycliques.

L'organohydrogénopolysiloxane **B** selon l'invention est porteur d'au moins deux atomes d'hydrogène liés à des atomes de silicium, et de préférence d'au moins trois atomes d'hydrogène liés à des atomes de silicium. Selon un mode de réalisation préféré, ce polyorganosiloxane **B** comprend :
(i) au moins deux motifs de formule (B1), et de préférence au moins trois motifs de formule (B1) :

   H_{d}LₑSiO_{(4-(d+e))/2} (B1)

   dans laquelle :
   - L représente un radical monovalent différent d'un atome d'hydrogène,
   - H représente l'atome d'hydrogène,
   - d et e représentent des nombres entiers, d valant 1 ou 2, e valant 0, 1 ou 2 et (d+e) valant 1, 2 ou 3 ;
   et éventuellement d'autres motifs de formule (B2) :

   L_{f}SiO_{(4-f)/2} (B2)

   dans laquelle :
   - L a la même signification que ci-dessus, et
   - f représente un nombre entier compris entre 0 et 3.

Il est entendu dans la formule (B1) et dans la formule (B2) ci-dessus que si plusieurs groupes L sont présents, ils peuvent être identiques ou différents les uns des autres.

Dans la formule (B1), le symbole d peut préférentiellement valoir 1.

De plus, dans la formule (B1) et dans la formule (B2), L peut représenter un radical monovalent choisi dans le groupe constitué par un groupe alkyle ayant 1 à 8 atomes de carbone, éventuellement substitué par au moins un atome d'halogène, et un groupe aryle. L peut avantageusement représenter un radical monovalent choisi dans le groupe constitué par méthyle, éthyle, propyle, 3,3,3-trifluoropropyle, xylyle, tolyle et phényle. Des exemples de motifs de formule (B1) sont les suivants : H(CH₃)₂SiO_{1/2}, HCH₃SiO_{2/2} et H(C₆H₅)SiO_{2/2}.

Le polyorganosiloxane **B** peut présenter une structure linéaire, ramifiée, cyclique ou en réseau.

Lorsqu'il s'agit de polyorganosiloxanes linéaires, ceux-ci peuvent être essentiellement constitués :
- de motifs siloxyles « D » choisi parmi les motifs de formules HLSiO_{2/2} et L₂SiO_{2/2} ;
- de motifs siloxyles « M » choisis parmi les motifs de formules HL₂SiO_{1/2} et L₃SiO_{2/2}.

Ces polyorganosiloxanes linéaires peuvent être des huiles ayant une viscosité dynamique à 25°C comprise entre 1 mPa.s et 100 000 mPa.s, préférentiellement entre 10 mPa.s et 5 000 mPa.s, ou des gommes ayant une viscosité dynamique à 25°C supérieure à 100 000 mPa.s.

Lorsqu'il s'agit de polyorganosiloxanes cycliques, ceux-ci peuvent être constitués de motifs siloxyles « D » choisi parmi les motifs de formules HLSiO_{2/2} et L₂SiO_{2/2}, ou de motifs siloxyle de formule HLSiO_{2/2} uniquement. Les motifs de formule L₂SiO_{2/2} peuvent être notamment des dialkylsiloxy ou des alkylarylsiloxy. Ces polyorganosiloxanes cycliques peuvent avoir une viscosité dynamique à 25°C comprise entre 1 mPa.s et 5 000 mPa.s.

Des exemples de polyorganosiloxanes **B** sont :
- les polydiméthylsiloxanes à extrémités hydrogénodiméthylsilyles ;
- les poly(diméthylsiloxane-co-hydrogénométhylsiloxane) à extrémités triméthylsilyles ;
- les poly(diméthylsiloxane-co-hydrogénométhylsiloxane) à extrémités hydrogénodiméthyl-silyles ;
- les polyhydrogénométhylsiloxanes à extrémités triméthylsilyles ;
- les hydrogénométhylpolysiloxanes cycliques.

Lorsqu'il s'agit de polyorganosiloxanes ramifiés ou en réseaux, ceux-ci peuvent comprendre en outre :
- des motifs siloxyles « T » choisis parmi les motifs de formules HSiO_{3/2} et LSiO_{3/2} ;
- des motifs siloxyles « Q » de formule SiO_{4/2}.

Avantageusement, la composition silicone selon l'invention contient des composés polyorganosiloxanes **A** et des composés organohydrogénopolysiloxanes **B** dans des proportions telles que le rapport molaire des atomes d'hydrogène liés aux atomes de silicium dans le composé organohydrogénopolysiloxane **B** sur les groupements alcényles liés à des atomes de silicium dans le composé polyorganosiloxane **A** est compris de façon préférée entre 0,1 et 10, et de façon plus préférée entre 0,5 et 5.

La composition silicone selon l'invention comprend en outre un catalyseur **C** d'hydrosilylation. De préférence, il s'agit d'un composé du platine, par exemple l'acide chloroplatinique hexahydrate, le catalyseur de Karstedt qui est constitué de complexes de platine avec du divinyltétraméthyldisiloxane comme ligand (voir par exemple dans le brevet US 3 775 452) ou un catalyseur au platine comprenant des ligands carbènes.

De manière préférée, lorsque le catalyseur **C** comprend du platine, la quantité d'inhibiteur **D** représente de façon préférée entre 10 ppm et 2000 ppm en poids, de façon plus préférée entre 20 ppm et 1000 ppm en poids, par rapport au poids de platine.

D'autres agents auxiliaires et additifs usuels peuvent être incorporés à la composition selon l'invention. Ceux-ci sont choisis en fonction des applications dans lesquelles sont utilisées lesdites compositions.

Comme familles d'additifs fonctionnels usuels, on peut citer :
- les promoteurs d'adhérence, tel que par exemple les composés organosiliciques portant à la fois un ou des groupes hydrolysables liés à l'atome de silicium, et un ou des groupes organiques choisis dans le groupe des radicaux (méth)acrylate, époxy, et alcényle, plus préférentiellement encore dans le groupe constitué par les composés suivants pris seul ou en mélange : vinyltriméthoxysilane (VTMO), 3-glycidoxypropyl-triméthoxysilane (GLYMO), méthacryloxypropyltriméthoxy-silane (MEMO);
- les additifs antibrouillard (« anti-misting »), tels que les particules de silice ou des polyorganosiloxanes branchés ;
- les modulateurs d'adhérence ;
- les additifs pour augmenter la consistance ;
- les agents antigels ;
- les agents de mouillage ;
- les agents anti-mousses ;
- les charges ;
- les pigments ;
- les bactéricides ;
- les additifs de tenue thermique, de tenue aux huiles ou de tenue au feu, par exemple les oxydes métalliques.

Sur le plan quantitatif, les compositions selon l'invention peuvent présenter des proportions standards dans le domaine technique considéré, sachant que l'on doit tenir compte également de l'application visée.

La composition silicone selon l'invention peut être préparée en mélangeant les différents composés selon les méthodes connues de l'homme du métier. De préférence, le catalyseur d'hydrosilylation est le dernier composé ajouté au mélange. Il n'est pas exclu dans la présente invention que les constituants du mélange d'inhibition (inhibiteur, photoamorceur et TTMSS) soient mélangés à part puis ajoutés aux autres constituants de la composition sous la forme d'un additif prêt à l'utilisation.

La composition silicone selon l'invention est particulièrement adaptée pour la préparation de revêtement silicone, et tout particulièrement pour la préparation de revêtement silicone anti-adhérents. Ce revêtement permet de rendre des supports non adhérents à des surfaces auxquelles elles adhèrent normalement. La présente invention a également pour objet un procédé de préparation d'un revêtement silicone anti-adhérent sur un substrat comprenant les étapes consistant à revêtir au moins une partie dudit substrat avec ladite composition silicone selon l'invention, puis à durcir cette composition par irradiation.

Le support est de préférence en matériau souple. Il peut avantageusement être choisi parmi les supports souples en papier, carton ou analogue, les supports souples fibreux tissés ou non, et les supports souples en polymère. A titre d'exemples de supports, on peut citer des papiers de divers types (supercalendré, couché, glassine), les cartons, les feuilles de cellulose, les films de matière plastique, notamment en polyester (par exemple en PET), en polyéthylène, en polypropylène ou en polychlorure de vinyle.

La composition peut être appliquée à l'aide de dispositifs d'enduction connus de l'homme du métier, en particulier à l'aide d'une une machine industrielle d'enduction à grande vitesse, par exemple à des vitesses supérieures ou égales à 100 m/min, de façon préférée supérieures ou égales à 300 m/min, et de façon plus préférée comprises entre 500 m/min et 1000 m/min. Ces dispositifs comprennent une tête d'enduction à cinq rouleaux et des systèmes à lames d'air ou à barre égalisatrice, permettant le dépôt de la composition liquide sur les supports. Les quantités de compositions déposées sont de l'ordre de 0,1 à 5 g par m² de surface à traiter, ce qui correspond au dépôt de couches de l'ordre de 0,1 à 5 µm d'épaisseur.

Le support revêtu de la composition est exposé à un rayonnement dont la longueur d'onde est de préférence comprise entre 200 nm et 800 nm, de préférence un rayonnement UV dont la longueur d'onde est de préférence comprise entre 200 nm et 400 nm. Les lampes UV couramment utilisées sont des lampes UV à vapeur de mercure (hautes, basses et surtout moyennes pressions). Celles-ci peuvent être dopées au gallium-indium, au fer ou au plomb pour modifier la longueur d'onde d'émission. Les métaux contenus dans ces lampes peuvent être excités par arc électrique et décharge micro-onde. D'autres sources de rayonnement actuellement disponibles industriellement sont les LED avec des spectres d'émission resserrés sur 365 nm, 375 nm, 385 nm, 395 nm, 400 nm et 405 nm, ainsi que les lampes halogènes. On peut éventuellement effectuer un chauffage du support enduit à une température d'au moins 40°C, de préférence comprise entre 40°C et 190°C de manière à accélérer le durcissement de la composition selon l'invention.

Par ailleurs, cette composition silicone durcissable peut aussi être utilisée pour la préparation de matériaux élastomères durs. Le procédé de préparation de matériaux élastomères durs consiste à provoquer le durcissement de la composition par irradiation et éventuellement par chauffage de la composition silicone durcissable.

Ces matériaux élastomères durs peuvent être préparés et mise en forme par des techniques connues de l'homme du métier telles que le moulage ou l'extrusion en chambre UV. Le matériau élastomère peut avoir une épaisseur variable. De préférence, dans la présente invention, le matériau élastomère a une faible épaisseur comprise généralement entre 0,15 mm et 1 cm, de préférence entre 1 mm et 1 cm. Dans le cas où le matériau élastomère a une épaisseur plus importante, par exemple comprise entre 1 cm et 10 cm, il est possible d'adapter la longueur d'onde de l'irradiation pour qu'elle pénètre en profondeur dans le matériau. Par ailleurs, on peut ajouter dans la composition silicone des composés photosensibilisateurs connus de l'homme du métier. Ce mode de réalisation est particulièrement adapté à la fabrication de tubes élastomères, de câbles ou de tiges, et pour l'encapsulation (« potting ») de composants électroniques.

Les inventeurs ont montré que, lorsque la composition silicone selon l'invention était soumise à une irradiation, le système d'inhibition de la réaction était désactivé et la composition pouvait durcir par l'effet des réactions d'hydrosilylation. La composition silicone selon l'invention présente les propriétés avantageuses suivantes :
- La composition silicone a une bonne stabilité au stockage : sa durée de vie en pot, sans soumission à une irradiation, est supérieure à 12 heures, de préférence supérieure à 15 heures, à température ambiante et supérieure à 1 heure à 40°C. Cela montre que le système d'inhibition est efficace. Les réactions d'hydrosilylation sont avantageusement inhibées pendant des durées suffisantes pour permettre la manipulation de la composition silicone sur le plan industriel.
- Les inventeurs ont découvert que, de façon très avantageuse, la levée de l'inhibition est très rapide. La vitesse de la levée de l'inhibition qui est provoquée par l'irradiation de la compotions silicone peut être estimée en mesurant la durée nécessaire pour constater un début de réticulation de la composition.
- En outre, la rapide levée de l'inhibition s'accompagne avantageusement d'une bonne cinétique de réticulation. La combinaison d'une levée rapide de l'inhibition avec une cinétique de réticulation élevée permet d'atteindre de faibles temps de gel des compositions. L'utilisation du système d'inhibition selon l'invention permet d'abaisser le temps de gel de la composition de façon significative, sans pour autant diminuer la stabilité au stockage de la composition.
- Le système d'inhibition de la réaction permet une levée plus rapide de l'inhibition que les inhibiteurs connus. De ce fait, pour une durée d'irradiation égale, la composition silicone selon l'invention peut durcir de façon équivalente aux compositions connues avec moins de catalyseur. La composition selon l'invention permet donc avantageusement de diminuer la quantité de catalyseur d'hydrosilylation dans la composition silicone sans modifier la vitesse de durcissement.
- Le durcissement de la composition silicone est activé par irradiation. Cette méthode est facile à mettre en oeuvre, et présente l'avantage de pouvoir choisir la zone de durcissement, permettant ainsi de consommer moins d'énergie que via les méthodes thermiques. Avantageusement, l'irradiation ne provoque pas un chauffage excessif de la composition et du support sur lequel elle a été déposée. De préférence, la composition et son support sont soumis à des températures inférieures ou égales à 50°C, de façon plus préférée inférieures ou égales à 40°C, et de façon plus préférée inférieures ou égales à 35°C. Il s'agit de températures nettement inférieures aux températures nécessaires au durcissement des compositions silicones par voie thermique, qui nécessitent le passage dans un four chauffé à une température généralement comprise entre 70° et 200°C. La composition selon l'invention est donc particulièrement utile pour le revêtement de supports sensibles à la chaleur.
- La composition silicone selon l'invention peut être mise en oeuvre à atmosphère ambiante, ce qui représente un avantage industriel important par rapport à d'autres compositions silicones photoréticulables. En effet, les compositions silicones réticulables par irradiation font appel classiquement à des réactions chimiques radicalaires qui nécessitent souvent une atmosphère inerte, sans oxygène. Dans la présente invention, les réactions de durcissement de la composition silicone ne sont pas des réactions radicalaires mais essentiellement des réactions de polyaddition. L'inertage des moyens de production n'est donc avantageusement pas nécessaire.

D'autres buts, caractéristiques et avantages de l'invention apparaîtront des exemples suivants, qui sont donnés à titre purement illustratif et nullement limitatif.

### EXEMPLES

### Réactifs utilisés :

POS^{Vi} **A** : Huile polydiméthylsiloxane vinylée bout de chaîne de formule moyenne M^{vi}D₇₅M^{vi} et de viscosité dynamique à 25°C = 100 mPa.s, avec M^{Vi} = (CH₃)₂(vinyl)SiO_{1/2} et D = (CH₃)₂SiO_{2/2}.
POS^{H} **B** : Huile polyméthylhydrogénosiloxane à extrémité triméthylsilyl de formule moyenne M₂D'₄₅ et de viscosité dynamique à 25°C de 20 mPa.s, avec M= (CH₃)₃SiO_{1/2} et D' = H(CH₃)₁SiO_{2/2}.
Catalyseur **C :** solution de platine 0 avec des ligands divinyltétraméthyldisiloxane dilué dans une huile silicone avec une teneur en Pt élémentaire de 2800 ppm massique.
Inhibiteur **D :** 1-éthynyl-1-cyclohexanol (ECH), qui est un alcool α-acétylénique vrai.
Photoamorceur **E :**
   - Omnirad 102, commercialisé par la société IGM Resins : 2-hydroxy-2-méthyl-1-(4-tert-butyl)phényl propanone (photoamorceur de type I) ;
   - l'Esacure® TZT, commercialisé par la société Lamberti : mélange de 4-méthylbenzophénone et de 2,4,6-triméthylbenzophénone (photoamorceur de type II). 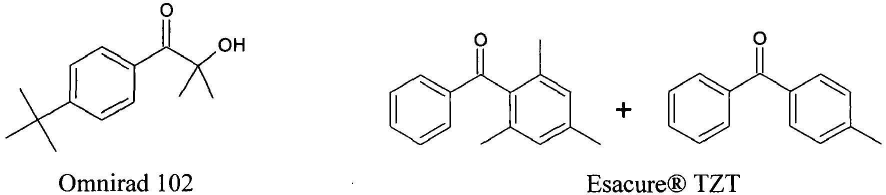
TTMSS : tris(triméthylsilyl)silane, commercialisé par la société Aldrich.

### Préparation des compositions silicones :

Chaque formulation a été préparée dans les proportions indiquées dans les tableaux ci-dessous et de la façon suivante : L'inhibiteur **D** a été mélangé au POS^{VI} **A** jusqu'à solubilisation totale. Le POS^{H} **B** a été introduit dans le mélange inhibiteur **D** + POS^{VI} **A.** A ce mélange tri-composant, ont été éventuellement ajoutés (selon les quantités indiquées dans les tableaux) le TTMSS **F** et un photoamorceur **E.** Enfin, la formulation a été complétée avec un ajout de catalyseur **C.**

### Protocole expérimental :

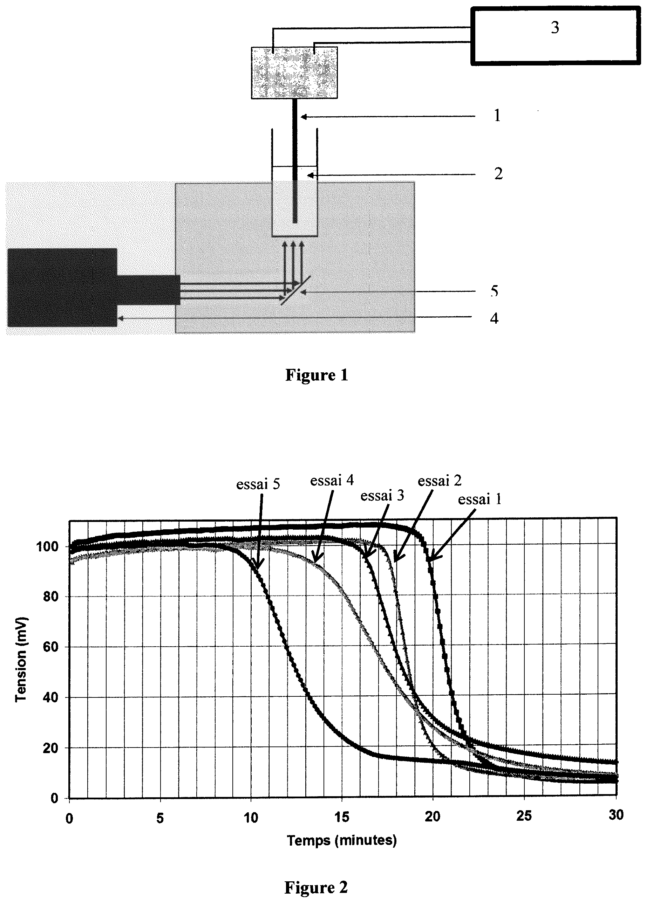

La durée de l'inhibition du système est mesurée par suivi du comportement rhéologique de la formulation. Pour cela, un dispositif tel que représenté sur la **figure 1** a été utilisé. Ce dispositif est muni d'une aiguille vibrante **1** plongeant dans la formulation étudiée **2.** La fréquence de la vibration de l'aiguille est imposée. Avant irradiation, la formulation **2** est liquide et l'aiguille **1** vibre librement. La tension de sortie suivie par un dispositif de traitement du signal **3** est donc élevée. Au temps initial t₀, la source de lumière UV **4** a été mise en route et cette lumière irradie la formulation **2** par l'intermédiaire d'un miroir **5.** Lorsque la formulation **2** commence à durcir sous l'effet des réactions de réticulation, l'amplitude d'oscillation de l'aiguille **1** est diminuée et la tension de sortie diminue.

Le début de la réticulation est le temps à partir duquel la tension de sortie n'est plus constante.

La cinétique de réticulation est mise en évidence par la pente de la courbe tension de sortie en fonction du temps.

Le temps de gel de la formulation est défini ici comme étant le point minimum de la dérivée de la tension de sortie en fonction du temps

Préalablement aux essais faits sur des formulations silicones selon l'invention, un contrôle de la température dans le dispositif a été effectué. On remplace la formulation 2 par une huile silicone. Une sonde de mesure de la température a été plongée dans l'huile silicone. L'échantillon a été irradié pendant 45 minutes. La température maximum atteinte est de 35°C.

### Essais et résultats :

L'ensemble des essais ont été réalisés dans les mêmes conditions (moment d'introduction du catalyseur à base de platine, temps et mode d'homogénéisation du mélange, volume de mélange, temps entre les différents ajouts et mise en place de l'irradiation).

Les formulations ont été préparées tel que décrit ci-dessus dans les proportions indiquées dans le tableau 1 :

**Tableau 1**

| | **Essai 1 Comparatif** | **Essai 2 Comparatif** | **Essai 3 Comparatif** | **Essai 4 Comparatif** | **Essai 5 Invention** |
|---|---|---|---|---|---|
| POS^{Vi} **A** | 3,00 g | 3,00 g | 3,00 g | 3,00 g | 3,00 g |
| POS^{H} **B** | 0,21 g | 0,21 g | 0,21 g | 0,21 g | 0,21 g |
| Catalyseur **C** | 0,11 g | 0,11 g | 0,11 g | 0,11 g | 0,11 g |
| Inhibiteur **D** | 2,01 g | 2,01 g | 2,01 g | 2,01 g | 2,01 g |
| Photoamorceur **E :** Omnirad 102 | 0 | 0 | 0 | 0,0198 g | 0,0247 g |
| TTMSS | 0 | 0,0128 g | 0,0297 g | 0 | 0,0140 g |
| *Ratio molaires :* | | | | | |
| Inhibiteur **D** / Catalyseur **C** | 15,45 | 15,63 | 15,95 | 14,99 | 14,66 |
| TTMSS / Inhibiteur **D** | 0 | 2,12 | 4,93 | 0 | 2,32 |
| Photoamorceur **E** / Inhibiteur **D** | 0 | 0 | 0 | 3,70 | 4,62 |
| TTMSS / Photoamorceur **E** | - | - | - | 0 | 0,50 |
| *Résultat :* | | | | | |
| **Temps de gel (min) :** | **20,4** | **18,5** | **17,4** | **16,5** | **11,7** |
| **Début de la réticulation (min) :** | **19** | **17,5** | **16** | **13** | **9** |

La puissance de la lampe de mercure était de 5,6 W/cm².

Les courbes représentant l'évolution de la tension de sortie aux bornes de l'aiguille oscillante en fonction du temps lors des essais 1 à 5 sont reportées sur la **figure 2****.**

Pour un ratio Inhibiteur **D** / Catalyseur **C** donné, le TTMSS ajouté sans photoamorceur et en large excès molaire par rapport à l'inhibiteur (ratios molaires TTMSS / Inhibiteur **D** de 2 à 5) a un impact positif mais limité sur le temps de début de réticulation et le temps de gel. (cf. essais comparatifs 1, 2 et 3).

Dans les même conditions, l'ajout de photoamorceur **E** sans TTMSS (essai comparatif 4), dans un ratio molaire Photoamorceur **E** / Inhibiteur **D** de 3,7, produit un effet plus performant sur le temps de début de réticulation et le temps de gel.

Finalement, lorsque le photoamorceur **E** et le TTMSS sont ajoutés ensemble (essai 5 selon l'invention), on constate un effet synergique : le début de la réticulation est observé après 9 minutes et le temps de gel passe de 20,4 minutes à 11,7 minutes (cf. essai comparatif 1 et essai selon l'invention 5).

D'autres formulations ont été préparées dans les proportions indiquées dans le tableau 2 :

**Tableau 2**

| | **Essai 6 comparatif** | **Essai 7 comparatif** | **Essai 8 comparatif** | **Essai 9 comparatif** | **Essai 10 comparatif** | **Essai 11 invention** |
|---|---|---|---|---|---|---|
| Pos^{Vi} **A** (en moles de fonctions Si-vinyle) | 3,66.10⁻³ | 3,66.10⁻³ | 3,66.10⁻³ | 3,66.10⁻³ | 3,66.10⁻³ | 3,66.10⁻³ |
| POS^{H} **B** (en moles de fonctions Si-H) | 6,12.10⁻³ | 6,13.10⁻³ | 6,13.10⁻³ | 6,13.10⁻³ | 6,14.10⁻³ | 6,12.10⁻³ |
| Catalyseur C (en ppm de Pt) | 61 | 61 | 59 | 63 | 64 | 68 |
| Inhibiteur **D** (en moles) | 4,65.10⁻⁵ | 4,65.10⁻⁵ | 4,66.10⁻⁵ | 4,65.10⁻⁵ | 4,65.10⁻⁵ | 4,65.10⁻⁵ |
| Photoamorceur **E :** Omnirad 102 (en moles) | 0 | 2,31.10⁻⁵ | 9,40.10⁻⁶ | 0 | 0 | 9,24.10⁻⁶ |
| TTMSS (en moles) | 0 | 0 | 0 | 9,53.10⁻⁶ | 2,36.10⁻⁵ | 9,84.10⁻⁷ |
| *Ratio molaires :* | | | | | | |
| TTMSS / Inhibiteur **D** | 0 | 0 | 0 | 0,2 | 0,5 | 0,02 |
| Photoamorceur **E** / Inhibiteur **D** | 0 | 0,5 | 0,2 | 0 | 0 | 0,2 |
| TTMSS / Photoamorceur **E** | - | 0 | 0 | - | - | 0,1 |
| *Résultat :* | | | | | | |
| **Temps de gel (min) :** | **24** | **16** | **17** | **23** | **22** | **13** |
| **Début de la réticulation (min) :** | **21** | **13** | **15** | **20** | **19** | **10** |
| **Pot life (heure) :** | **25** | **23** | **25** | **20** | **18** | **20** |

Les résultats obtenus à partir des essais décrits dans le tableau 2 confirment que la présence de TTMSS sans le photoamorceur (essais comparatifs 9 et 10) n'a pas d'impact significatif sur le début de réticulation et le temps de gel pour des ratios molaire TTMSS / Inhibiteur **D** de l'ordre de 0,2 à 0,5. Dans ces cas, les temps de gel sont compris entre 22 et 24 minutes.

L'ajout du photoamorceur **E** (sans ajout de TTMSS) a un effet plus important. Pour un ratio molaire Photoamorceur **E** / Inhibiteur **D** de 0,5 (essai comparatif 7), le temps de gel est de 16 minutes contre 24 minutes pour la formulation de référence (essai comparatif 6).

L'essai 11 (selon l'invention) illustre l'influence bénéfique de la présence du TTMSS et du photoamorceur **E.** On observe une réduction du temps de gel de 45% par rapport à la formulation de référence (essai comparatif 6) et de 23% par rapport à la formulation ne contenant que du photoamorceur **E** (essai comparatif 8).

D'autres formulations ont été préparées dans les proportions indiquées dans le tableau 3 suivant et confirment les avantages de l'invention.

**Tableau 3**

| | **Essai 12 comparatif** | **Essai 13 invention** | **Essai 14* invention** | **Essai 15 invention** | **Essai 16 invention** | **Essai 17* invention** | **Essai 18 invention** |
|---|---|---|---|---|---|---|---|
| POS^{Vi} **A** (en moles de fonctions Si-vinyle) | 3,65.10⁻³ | 3,66.10⁻³ | 3,66.10⁻³ | 3,66.10⁻³ | 3,66.10⁻³ | 3,66.10⁻³ | 7,58.10⁻³ |
| POS^{H} **B** (en moles de fonctions Si-H) | 6,12.10⁻³ | 6,12.10⁻³ | 6,13.10⁻³ | 6,13.10⁻³ | 6,14.10⁻³ | 6,13.10⁻³ | 1,27.10⁻² |
| Catalyseur **C** (en ppm de Pt) | 62 | 63 | 62 | 63 | 61 | 62 | 58 |
| Inhibiteur **D** (en moles) | 4,65.10⁻⁵ | 4,65.10⁻⁵ | 4,66.10⁻⁵ | 4,65.10⁻⁵ | 4,66.10⁻⁵ | 4,66.10⁻⁵ | 9,64.10⁻⁵ |
| Photoamorceur **E :** Omnirad 102 (en moles) | 0 | 9,33.10⁻⁶ | 9,34.10⁻⁶ | 9,29.10⁻⁶ | 1,04.10⁻⁶ | 9,34.10⁻⁶ | 1,90.10⁻⁴ |
| TTMSS (en moles) | 0 | 1,48.10⁻⁷ | 1,02.10⁻⁶ | 9,44.10⁻⁶ | 1,03.10⁻⁶ | 1,02.10⁻⁶ | 1,87.10⁻⁶ |
| *Ratio molaires :* | | | | | | | |
| TTMSS / Inhibiteur **D** | 0 | 0,003 | 0,02 | 0,2 | 0,02 | 0,02 | 0,02 |
| Photoamorceur **E** / Inhibiteur **D** | 0 | 0,2 | 0,2 | 0,2 | 0,02 | 0,2 | 2 |
| TTMSS / Photoamorceur **E** | - | 0,02 | 0,1 | 1 | 1 | 0,1 | 0,01 |
| *Résultat :* | | | | | | | |
| **Temps de gel (min) :** | **20** | **11** | **13** | **12** | **16** | **13** | **16** |
| **Début de la réticulation (min) :** | **18** | **9** | **10** | **10** | **12** | **10** | **9** |
| **Pot life (heure) :** | **22** | **19** | **22** | **19** | | **22** | |

| | | | | | | | |
|---|---|---|---|---|---|---|---|
| (* les essais 14 et 17 sont identiques) | | | | | | | |

### Test de faisabilité avec un photoamorceur E de type II :

Plusieurs formulations ont été préparées dans les proportions indiquées dans le tableau 4 suivant :

**Tableau 4**

| | **Essai 19 comparatif** | **Essai 20 comparatif** | **Essai 21 comparatif** | **Essai 22 invention** | **Essai 23 invention** |
|---|---|---|---|---|---|
| POS^{Vi} **A** | 10 g (4 mmol) | 10 g (4 mmol) | 10 g (4 mmol) | 10 g (4 mmol) | 10 g (4 mmol) |
| POS^{H} **B** | 430 mg (6,9 mmol) | 430 mg (6,9 mmol) | 430 mg (6,9 mmol) | 430 mg (6,9 mmol) | 430 mg (6,9 mmol) |
| Catalyseur **C** | 100 mg (0,0014 mmol) | 100 mg (0,0014 mmol) | 100 mg (0,0014 mmol) | 100 mg (0,0014 mmol) | 100 mg (0,0014 mmol) |
| Inhibiteur **D** | 15 mg (0,121 mmol) | 15 mg (0,121 mmol) | 15 mg (0,121 mmol) | 15 mg (0,121 mmol) | 15 mg (0,121 mmol) |
| Photoamorceur **E :** Omnirad 102 | 0 | 0 | 0,023 mmol | 0,023 mmol | 0 |
| Photoamorceur **E :** Esacure TZT | 0 | 0 | 0 | 0 | 0,023 mmol |
| TTMSS | 0 | 67 mg (0,270 mmol) | 0 | 67 mg (0,270 mmol) | 67 mg (0,270 mmol) |
| *Ratio molaires :* | | | | | |
| Inhibiteur **D** / Catalyseur **C** | 86 | 86 | 86 | 86 | 86 |
| TTMSS / Inhibiteur **D** | 0 | 2,2 | 0 | 2,2 | 2,2 |
| Photoamorceur **E** / Inhibiteur **D** | 0 | 0 | 0,19 | 0,19 | 0,19 |
| TTMSS / Photoamorceur **E** | - | - | 0 | 11,7 | 11,7 |
| *Résultat :* | | | | | |
| **Temps de réticulation :** | **160 min** | **160 min** | **160 min** | **148 min** | **148 min** |

L'ajout d'un photoamorceur de type II a le même effet que l'ajout d'un photoamorceur de type I.

## Revendications

1. Composition silicone durcissable comprenant :
**A.** au moins un organopolysiloxane comprenant, par molécule, au moins deux radicaux alcényles liés à des atomes de silicium ;
**B.** au moins un organohydrogénopolysiloxane comprenant, par molécule, au moins deux atomes d'hydrogène liés à des atomes de silicium, et de préférence au moins trois atomes d'hydrogène liés à des atomes de silicium ;
**C.** au moins un catalyseur d'hydrosilylation ;
**D.** au moins un inhibiteur choisi parmi les alcools α-acétyléniques, les diesters α-α'-acétyléniques, les composés conjugués ène-yne, les cétones α-acétyléniques, les acrylonitriles, les maléates, les fumarates et les mélanges de ceux-ci,
**E.** au moins un photoamorceur,
**F.** du tris(triméthylsilyl)silane (TTMSS).

2. Composition selon la revendication 1, **caractérisée en ce que** l'inhibiteur **D** est un inhibiteur de type alcool α-acétylénique choisi parmi les composés de formule (D1) suivante :
(R¹)(R²)C(OH)-C≡CH (D1)
dans laquelle :
- le groupe R¹ représente un groupe alkyle, un groupe cycloalkyle, un groupe (cycloalkyl)alkyle, un groupe aryle ou un groupe arylalkyle,
- le groupe R² représente un atome d'hydrogène, un groupe alkyle, un groupe cycloalkyle, un groupe (cycloalkyl)alkyle, un groupe aryle ou un groupe arylalkyle,
- ou bien R¹ et R² constituent ensemble avec l'atome de carbone auquel ils sont liés un cycle aliphatique à 5, 6, 7 ou 8 chaînons, éventuellement substitué une ou plusieurs fois.

3. Composition selon la revendication 1, **caractérisée en ce que** l'inhibiteur **D** est un inhibiteur de type diester α-α'-acétylénique choisi parmi les composés de formule (D2) suivante : 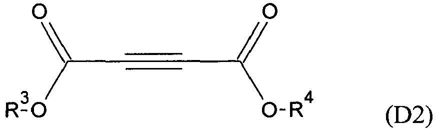 dans laquelle les groupe R³ et R⁴, identiques ou différents, représentent indépendamment l'un de l'autre un groupe alkyle, un groupe cycloalkyle, un groupe (cycloalkyl)alkyle, un groupe aryle, un groupe arylalkyle ou un groupe silyle.

4. Composition selon la revendication 1, **caractérisée en ce que** l'inhibiteur **D** est un inhibiteur de type maléate ou fumarate choisi parmi les composés de formules (D6) et (D7) suivantes : 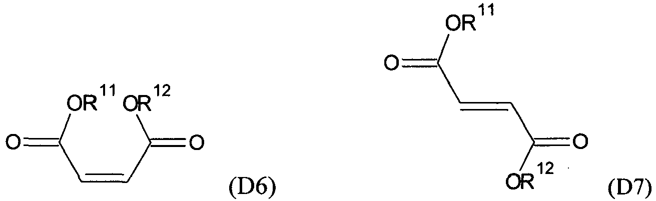 dans lesquelles R¹¹ et R¹², identiques ou différents, représentent indépendamment l'un de l'autre un groupe alkyle ou alcényle, un groupe cycloalkyle, un groupe (cycloalkyl)alkyle, un groupe aryle ou un groupe arylalkyle, lesdits groupes alkyles, alcényles, cycloalkyles, (cycloalkyl)alkyles, aryles et arylalkyles pouvant être substitués par un groupe alcoxy.

5. Composition selon l'une quelconque des revendications 1 à 4, **caractérisée en ce qu'**elle comprend au moins un photoamorceur **E** de type I, et plus préférentiellement au moins une alpha-hydroxy-acétophénone, ou au moins un photoamorceur **E** de type II, et plus préférentiellement au moins une benzophénone ou un mélange de plusieurs benzophénones.

6. Composition selon l'une quelconque des revendications 1 à 5, **caractérisée en ce que** les ratios molaires entre l'inhibiteur **D**, le photoamorceur **E** et le TTMSS sont tels que :
- le ratio molaire entre le TTMSS et l'inhibiteur **D** est compris entre 0,0001 et 20, de façon plus préférée entre 0,001 et 5, et de façon encore plus préférée entre 0,001 et 3 ; et/ou
- le ratio molaire entre le TTMSS et le photoamorceur **E** est compris entre 0,001 et 10, de façon plus préférée entre 0,005 et 5, et de façon encore plus préférée entre 0,01 et 2.

7. Composition selon l'une quelconque des revendications 1 à 6, **caractérisée en ce que**, lorsque le catalyseur **C** comprend du platine, la quantité d'inhibiteur **D** représente entre 10 ppm et 2000 ppm en poids, de façon plus préférée entre 20 ppm et 1000 ppm en poids, par rapport au poids de platine.

8. Procédé de préparation d'un revêtement silicone, de préférence d'un revêtement silicone anti-adhérent, sur un substrat comprenant les étapes consistant à revêtir ledit substrat avec la composition silicone durcissable telle définie dans l'une quelconque des revendications 1 à 7 et durcir cette composition par irradiation.

9. Procédé de préparation de matériaux élastomères durs consistant à provoquer le durcissement de la composition silicone durcissable telle définie dans l'une quelconque des revendications 1 à 7 par irradiation et éventuellement par chauffage de ladite composition.

10. Utilisation d'un mélange d'un inhibiteur choisi parmi les alcools α-acétyléniques, les diesters α-α'-acétyléniques, les composés conjugués ène-yne, les cétones α-acétyléniques, les acrylonitriles, les maléates, les fumarates et les mélanges de ceux-ci, d'un photoamorceur et de TTMSS comme système d'inhibition dans une composition silicone durcissable.

## Patentansprüche

1. Härtbare Silikonzusammensetzung, umfassend:
**A.** mindestens ein Organopolysiloxan, das pro Molekül mindestens zwei an Siliciumatome gebundene Alkenylreste aufweist;
**B.** mindestens ein Organohydrogenpolysiloxan, das pro Molekül mindestens zwei an Siliciumatome gebundene Wasserstoffatome und vorzugsweise mindestens drei an Siliciumatome gebundene Wasserstoffatome aufweist;
**C.** mindestens einen Hydrosilylierungskatalysator;
**D.** mindestens einen Inhibitor, der aus α-acetylenischen Alkoholen, α,α'-acetylenischen Diestern, konjugierten En-In-Verbindungen, α-acetylenischen Ketonen, Acrylnitrilen, Maleaten, Fumaraten und Mischungen davon ausgewählt ist,
**E.** mindestens einen Photoinitiator;
**F.** Tris(trimethylsilyl)silan (TTMSS).

2. Zusammensetzung nach Anspruch 1, **dadurch gekennzeichnet, dass** es sich bei dem Inhibitor **D** um einen Inhibitor vom Typ α-acetylenischer Alkohol handelt, der aus den Verbindungen der folgenden Formel (D1) ausgewählt ist:
(R¹) (R²)C(OH)-C≡CH (D1)
in der:
- die Gruppe R¹ für eine Alkylgruppe, eine Cycloalkylgruppe, eine (Cycloalkyl)alkylgruppe, eine Arylgruppe oder eine Arylalkylgruppe steht,
- die Gruppe R² für ein Wasserstoffatom, eine Alkylgruppe, eine Cycloalkylgruppe, eine (Cycloalkyl)alkylgruppe, eine Arylgruppe oder eine Arylalkylgruppe steht,
- oder R¹ und R² zusammen mit dem Kohlenstoffatom, an das sie gebunden sind, einen 5-, 6-, 7- oder 8-gliedrigen aliphatischen Ring bilden, der gegebenenfalls ein- oder mehrfach substituiert ist.

3. Zusammensetzung nach Anspruch 1, **dadurch gekennzeichnet, dass** es sich bei dem Inhibitor D um einen Inhibitor vom Typ α,α'-acetylenischer Diester handelt, der aus den Verbindungen der folgenden Formel (D2) ausgewählt ist: 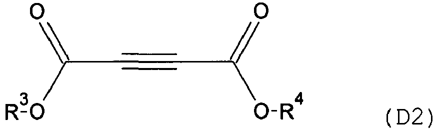 in der die Gruppen R³ und R⁴ gleich oder verschieden sind und unabhängig voneinander für eine Alkylgruppe, eine Cycloalkylgruppe, eine (Cycloalkyl)alkylgruppe, eine Arylgruppe, eine Arylalkylgruppe oder eine Silylgruppe stehen.

4. Zusammensetzung nach Anspruch 1, **dadurch gekennzeichnet, dass** es sich bei dem Inhibitor **D** um einen Inhibitor vom Typ Maleat oder Fumarat handelt, der aus den Verbindungen der folgenden Formeln (D6) und (D7) ausgewählt ist: 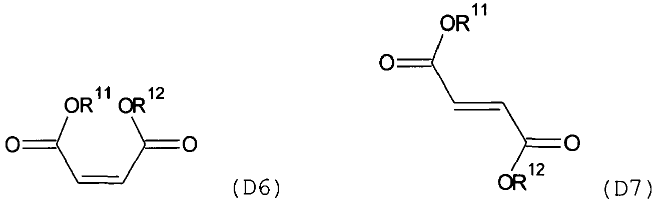 in denen R¹¹ und R¹² gleich oder verschieden sind und unabhängig voneinander für eine Alkyl- oder Alkenylgruppe, eine Cycloalkylgruppe, eine (Cycloalkyl)alkylgruppe, eine Arylgruppe oder eine Arylalkylgruppe stehen, wobei die Alkyl-, Alkenyl-, Cycloalkyl-, (Cycloalkyl)alkyl-, Aryl- und Arylalkylgruppen durch eine Alkoxygruppe substituiert sein können.

5. Zusammensetzung nach einem der Ansprüche 1 bis 4, **dadurch gekennzeichnet, dass** sie mindestens einen Typ-I-Photoinitiator **E** und weiter bevorzugt mindestens ein alpha-Hydroxyacetophenon oder mindestens einen Typ-II-Photoinitiator **E** und weiter bevorzugt mindestens ein Benzophenon oder eine Mischung von mehreren Benzophenonen umfasst.

6. Zusammensetzung nach einem der Ansprüche 1 bis 5, **dadurch gekennzeichnet, dass** die Molverhältnisse zwischen dem Inhibitor **D,** dem Photoinitiator **E** und dem TTMSS so beschaffen sind, dass:
- das Molverhältnis zwischen dem TTMSS und dem Inhibitor **D** zwischen 0,0001 und 20, weiter bevorzugt zwischen 0,001 und 5 und noch weiter bevorzugt zwischen 0,001 und 3 liegt; und/oder
- das Molverhältnis zwischen dem TTMSS und dem Photoinitiator **E** zwischen 0,001 und 10, weiter bevorzugt zwischen 0,005 und 5 und noch weiter bevorzugt zwischen 0,01 und 2 liegt.

7. Zusammensetzung nach einem der Ansprüche 1 bis 6, **dadurch gekennzeichnet, dass** dann, wenn der Katalysator **C** Platin umfasst, die Menge von Inhibitor **D** zwischen 10 und 2000 Gew.-ppm, weiter bevorzugt zwischen 20 und 1000 Gew.-ppm, bezogen auf das Gewicht von Platin, liegt.

8. Verfahren zur Herstellung einer Silikonbeschichtung, vorzugsweise einer Silikon-Antihaftbeschichtung, auf einem Substrat, bei dem man das Substrat mit der härtbaren Silikonzusammensetzung gemäß einem der Ansprüche 1 bis 7 beschichtet und diese Zusammensetzung durch Bestrahlung härtet.

9. Verfahren zur Herstellung von harten Elastomermaterialien, das darin besteht, dass man die Härtung der härtbaren Silikonzusammensetzung gemäß einem der Ansprüche 1 bis 7 durch Bestrahlung und gegebenenfalls durch Erhitzen der Zusammensetzung bewirkt.

10. Verwendung einer Mischung aus einem Inhibitor, der aus α-acetylenischen Alkoholen, α,α'-acetylenischen Diestern, konjugierten En-In-Verbindungen, α-acetylenischen Ketonen, Acrylnitrilen, Maleaten, Fumaraten und Mischungen davon ausgewählt ist, einem Photoinitiator und TTMSS als Inhibierungssystem in einer härtbaren Silikonzusammensetzung.

## Claims

1. Curable silicone composition comprising:
**A.** at least one organopolysiloxane comprising, per molecule, at least two alkenyl radicals bonded to silicon atoms;
**B.** at least one organohydrogenopolysiloxane comprising, per molecule, at least two hydrogen atoms bonded to silicon atoms, and preferably at least three hydrogen atoms bonded to silicon atoms;
**C.** at least one hydrosilylation catalyst;
**D**. at least one inhibitor chosen from α-acetylenic alcohols, α,α'-acetylenic diesters, conjugated ene-yne compounds, α-acetylenic ketones, acrylonitriles, maleates and fumarates, and mixtures thereof,
**E.** at least one photoinitiator,
**F.** tris(trimethylsilyl)silane (TTMSS).

2. Composition according to Claim 1, **characterized in that** the inhibitor **D** is an inhibitor of α-acetylenic alcohol type chosen from the compounds of formula (D1) below:
(R¹) (R²)C(OH)-C≡CH (D1)
in which:
- the group R¹ represents an alkyl group, a cycloalkyl group, a (cycloalkyl)alkyl group, an aryl group or an arylalkyl group,
- the group R² represents a hydrogen atom, an alkyl group, a cycloalkyl group, a (cycloalkyl)alkyl group, an aryl group or an arylalkyl group,
- or R¹ and R² constitute, together with the carbon atom to which they are attached, a 5-, 6-, 7- or 8-membered aliphatic ring, optionally substituted one or more times.

3. Composition according to Claim 1, **characterized in that** the inhibitor **D** is an inhibitor of α,α'-acetylenic diester type chosen from the compounds of formula (D2) below: 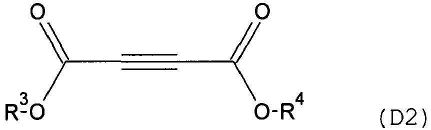 in which the groups R³ and R⁴, which may be identical or different, represent, independently of each other, an alkyl group, a cycloalkyl group, a (cycloalkyl)alkyl group, an aryl group, an arylalkyl group or a silyl group.

4. Composition according to Claim 1, **characterized in that** the inhibitor **D** is an inhibitor of maleate or fumarate type chosen from the compounds of formulae (D6) and (D7) below: 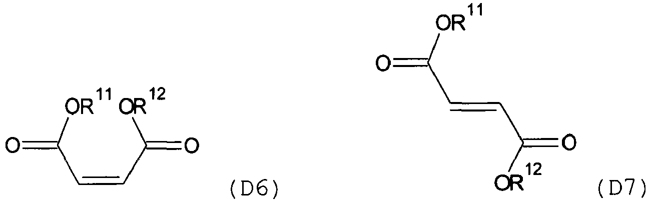 in which R¹¹ and R¹², which may be identical or different, represent, independently of each other, an alkyl or alkenyl group, a cycloalkyl group, a (cycloalkyl)alkyl group, an aryl group or an arylalkyl group, said alkyl, alkenyl, cycloalkyl, (cycloalkyl)alkyl, aryl and arylalkyl groups possibly being substituted with an alkoxy group.

5. Composition according to any one of Claims 1 to 4, **characterized in that** it comprises at least one type I photoinitiator **E,** and more preferentially at least one α(-hydroxyacetophenone, or at least one type II photoinitiator **E,** and more preferentially at least one benzophenone or a mixture of several benzophenones.

6. Composition according to any one of Claims 1 to 5, **characterized in that** the mole ratios between the inhibitor **D,** the photoinitiator **E** and TTMSS are such that:
- the mole ratio between TTMSS and the inhibitor **D** is between 0.0001 and 20, more preferably between 0.001 and 5, and even more preferably between 0.001 and 3; and/or
- the mole ratio between TTMSS and the photoinitiator **E** is between 0.001 and 10, more preferably between 0.005 and 5, and even more preferably between 0.01 and 2.

7. Composition according to any one of Claims 1 to 6, **characterized in that**, when the catalyst **C** comprises platinum, the amount of inhibitor **D** represents between 10 ppm and 2000 ppm by weight, more preferably between 20 ppm and 1000 ppm by weight, relative to the weight of platinum.

8. Process for preparing a silicone coating, preferably a non-stick silicone coating, on a substrate, comprising the steps consisting in coating said substrate with a curable silicone composition as defined in any one of Claims 1 to 7 and curing this composition by irradiation.

9. Process for preparing hard elastomeric materials, which consists in bringing about the curing of the curable silicone composition as defined in any one of Claims 1 to 7 by irradiation and optionally by heating of said composition.

10. Use of a mixture of an inhibitor chosen from α-acetylenic alcohols, α,α'-acetylenic diesters, conjugated ene-yne compounds, α-acetylenic ketones, acrylonitriles, maleates and fumarates and mixtures thereof, of a photoinitiator and of TTMSS as an inhibition system in a curable silicone composition.
